# EUROPÄISCHE PATENTSCHRIFT

(11) **EP 2 337 667 B1**
(45) Veröffentlichungstag und Bekanntmachung des Hinweises auf die Patenterteilung: **27.02.2013**
(21) Anmeldenummer: 08874980.9
(22) Anmeldetag: 20.10.2008
(51) Int. Cl.: B29C 67/00, A61C 13/00

(54) **VORRICHTUNG UND VERFAHREN ZUR VERARBEITUNG VON LICHTPOLYMERISIERBAREM MATERIAL ZUM SCHICHTWEISEN AUFBAU VON FORMKÖRPERN**
DEVICE AND METHOD FOR PROCESSING LIGHT-POLYMERIZABLE MATERIAL FOR THE LAYERED ASSEMBLY OF MOLDS
DISPOSITIF ET PROCÉDÉ DE TRAITEMENT D UN MATÉRIAU PHOTOPOLYMÉRISABLE PERMETTANT LA RÉALISATION PAR COUCHES DE CORPS MOULÉS

(43) Veröffentlichungstag der Anmeldung: 29.06.2011
(73) Patentinhaber: Ivoclar Vivadent AG, 9494 Schaan (LI); Technische Universität Wien, 1040 Wien (AT)
(72) Erfinder: ROHNER, Gottfried, CH-9450 Altstätten (CH); WACHTER, Wolfgang, FL-9494 Schaan (LI); APPERT, Christoph, FL-9470 Vaduz (LI); PATZER, Johannes, A-1110 Wien (AT); STAMPFL, Jürgen, A-1050 Wien (AT)
(74) Vertreter: UEXKÜLL & STOLBERG
(86) Internationale Anmeldenummer: PCT/EP2008/008864
(87) Internationale Veröffentlichungsnummer: WO 2010/045950

(56) Entgegenhaltungen:
- DE-A1- 19 953 000
- DE-A1-102007 006 478
- US-A- 5 876 550

## Beschreibung

Die Erfindung betrifft eine Vorrichtung zur Verarbeitung von lichtpolymerisierbarem Material zum schichtweisen Aufbau eines Formkörpers unter Anwendung einer lithographiebasierten generativen Fertigung, z.B. Rapid Prototyping, mit einer Wanne mit einem wenigstens teilweise lichtdurchlässig ausgebildeten horizontalen Boden, in die lichtpolymerisierbares Material einfüllbar ist, einer horizontalen Bauplattform, die in einstellbarer Höhe über dem Wannenboden gehalten ist, einer Belichtungseinheit, die zur ortsselektiven Belichtung einer Fläche auf der Bauplattform mit einem Intensitätsmuster mit vorgegebener Geometrie ansteuerbar ist, einer Steuereinheit, die dazu vorbereitet ist, in aufeinanderfolgenden Belichtungsschritten übereinanderliegende Schichten auf der Bauplattform jeweils mit vorgegebener Geometrie durch Steuerung der Belichtungseinheit zu polymerisieren und nach jedem Belichtungsschritt für eine Schicht die Relativposition der Bauplattform zum Wannenboden anzupassen, um so sukzessive den Formkörper in der gewünschten Form, die sich aus der Folge der Schichtgeometrien ergibt, aufzubauen wobei die Wanne bezüglich der Belichtungseinheit und der Bauplattform horizontal beweglich ist und eine Zufuhreinrichtung vorgesehen ist, die unter Steuerung der Steuereinheit lichtpolymerisierbares Material in die wenigstens eine Wanne ausbringt, wobei Belichtungseinheit und Bauplattform horizontal auf Abstand zur Zufuhreinrichtung angeordnet sind, und die Steuereinheit dazu vorbereitet ist, die Wanne zwischen aufeinanderfolgenden Belichtungsschritten in vorgegebener Weise in einer horizontalen Ebene durch einen Antrieb zu bewegen, um so von der Zufuhreinrichtung auf den Wannenboden ausgebrachtes lichtpolymerisierbares Material in den Bereich zwischen Belichtungseinheit und Bauplattform zu bringen.

Die Erfindung betrifft ferner ein Verfahren zur Verarbeitung von lichtpolymerisierbarem Material zum Aufbau eines Formkörpers unter Anwendung einer lithographiebasierten generativen Fertigungstechnik, z.B. Rapid Prototyping, bei dem eine Schicht aus einem lichtpolymerisierbaren Material, das sich in zumindest einer Wanne mit einem insbesondere lichtdurchlässig (transparent oder transluzent) ausgebildeten, horizontalen Boden befindet, auf wenigstens einer in wenigstens eine Wanne ragenden, horizontalen Bauplattform mit vorgegebener Geometrie in einem Belichtungsfeld durch Belichten polymerisiert wird, die Bauplattform zur Bildung einer nachfolgenden Schicht vertikal verschoben wird, lichtpolymerisierbares Material auf die zuletzt gebildete Schicht nachgeführt wird, und durch Wiederholen der vorhergehenden Schritte schichtweise der Formkörper in der gewünschten Form, die sich aus der Folge der Schichtgeometrien ergibt, aufgebaut wird, wobei die Wanne horizontal in eine Zufuhrstellung versetzbar ist, eine Zufuhreinrichtung lichtpolymerisierbares Material wenigstens auf ein Belichtungsfeld des Wannenbodens ausbringt, bevor die zumindest eine Wanne in eine Belichtungsstellung versetzt wird, in der sich das Belichtungsfeld unterhalb der Bauplattform 0und oberhalb der Belichtungseinheit befindet, und die Belichtung erfolgt.

Die Erfindung ist insbesondere auf den Aufbau von Formkörpern gerichtet, die für Dentalrestaurationen verwendet werden sollen.

CAD-CAM-Technologien haben in der Dentalbranche schon seit einiger Zeit Einzug gehalten und lösen die traditionelle handwerkliche Herstellung von Zahnersatz ab. Die heute üblichen abtragenden Herstellungsverfahren zur Erzeugung von keramischen Dentalrestaurationskörpern haben aber einige Nachteile, die nach heutigem Stand der Technik mit vernünftigem Aufwand unter wirtschaftlichen Aspekten nicht verbessert werden können. In diesem Zusammenhang können aufbauende Herstellungsverfahren, die unter der Bezeichnung "rapid prototyping" (schnelle Prototypenbauweise) in Betracht gezogen werden, insbesondere stereolithographische Verfahren, bei denen jeweils eine neu aufgetragene Materialschicht durch ortsselektive Belichtung in der gewünschten Form polymerisiert wird, wodurch sukzessive durch schichtweise Formgebung der gewünschte Körper in seiner dreidimensionalen Form, die sich aus der Aufeinanderfolge der aufgebrachten Schichten ergibt, hergestellt wird.

In Bezug auf keramikgefüllte Polymere ist insbesondere WO 98/06560 zu nennen. Dabei wird ein keramischer Schlicker über eine dynamische Maske (Lichtmodulator) belichtet, wodurch sukzessive ein dreidimensionaler Körper aufgebaut werden soll. Bei dem beschriebenen Verfahren wird der keramischer Schlicker von oben auf einer Bauplattform belichtet. Bei einer solchen Belichtung von oben muss nach jeder Belichtung mit Hilfe einer Rakel eine neue dünne Materialschicht aufgetragen werden (typischerweise mit einer Schichtdicke, die zwischen 10 und 100 µm liegt). Bei Verwendung höher viskoser Materialien, wie dies keramikgefüllte Harze sind, können solche dünnen Schichten jedoch nur schwer in reproduzierbarer Weise aufgetragen werden.

Im Stand der Technik sind auch, jedenfalls für Photomonoymere ohne Keramikfüllung, Techniken bekannt, bei denen die Belichtung von unten durch den Boden einer Wanne hindurch, der mit einer transparenten Folie, Platte oder Platte mit einer elastomeren Oberfläche (z.B. aus Silikon oder Fluorelastomer) ausgeführt ist, erfolgt. Über der transparenten Folie oder Platte befindet sich eine Bauplattform, die von einem Hubmechanismus in einstellbarer Höhe über der Folie oder Platte gehalten wird. Im ersten Belichtungsschritt wird das Photopolymer zwischen Folie und der Bauplattform in der gewünschten Form durch Belichten polymerisiert. Beim Anheben der Bauplattform löst sich die polymerisierte erste Schicht von der Folie oder Platte und flüssiges Monomer fließt in den entstehenden Spalt nach. Durch sukzessives Anheben der Bauplattform und selektive Belichtung des nachgeflossenen Monomermaterials entsteht der schichtweise polymerisierte Formkörper. Eine zur Anwendung dieses Verfahrens geeignete Vorrichtung ist zum Beispiel in DE 199 57 370 A1 beschrieben, auf der die Oberbegriffen von Anspruch 1 und 20 beruhen. Eine ähnliche Verfahrensweise ist in DE 102 56 672 A1 beschrieben, die sich jedoch ebenfalls auf ungefüllte Polymere bezieht.

Bei der Verarbeitung keramikgefüllter Photopolymere stellen sich gegenüber der Verarbeitung von ungefüllten Photopolymeren folgende Probleme:
- Die Grünfestigkeit der polymerisierten Körper ist deutlich geringer (kleiner 10 MPa) als die Festigkeit eines ungefüllten Polymers (typischerweise ca. 20 bis 60 MPa). Dadurch ist der keramikgefüllte Photopolymerkörper mechanisch deutlich weniger belastbar (z.B. beim Abtrennen der zuletzt gebildeten Schicht von der Platte bzw. Folie, durch die hindurch von unten belichtet wurde).
- Durch den hohen Anteil an Keramikpartikeln kommt es zu ausgeprägter Lichtstreuung, und die Eindringtiefe des verwendeten Lichtes ist deutlich reduziert. Damit verbunden ist eine ungleichmäßige Polymerisation in z-Richtung (Strahlungsrichtung) bei Schichtdicken von mehr als 20 µm. Durch die geringe Eindringtiefe ist es auch schwierig, eine zuverlässige Haftung der ersten Schicht direkt an der Bauplattform zu erreichen. Bei keramikgefüllten Monomermaterial kann jedoch nicht gewährleistet werden, dass die anfängliche Startschicht ausreichend dünn ist (z.B. kleiner als 75 µm). Somit ließe sich auch bei sehr langer Belichtung der ersten Schicht eine reproduzierbare Haftkraft an der Bauplattform nicht gewährleisten.
- Im Vergleich zu ungefüllten Photopolymeren sind keramikgefüllte photopolymerisierbare Materialien deutlich viskoser. Dies stellt erhöhte Anforderungen an den verwendeten Beschichtungsmechanismus. Insbesondere kann die Zeit, die bis zum Nachfließen von keramikgefülltem Photopolymer nach Anheben der Bauplattform benötigt wird, erheblich länger sein. Auch stellt das Anheben und Absenken der Bauplattform in einem hochviskosen Photopolymermaterial erhöhte Anforderungen, um Beschädigungen des Bauteils zu vermeiden.
- Aufgrund der hohen Grundviskosität sind keramikgefüllte Photopolymere empfindlicher hinsichtlich Gelierung durch Streulicht oder Umgebungslicht. Bereits kleine Lichtintensitäten sind ausreichend, um durch die stattfindende Polymerisation die Viskosität des Materials über die zulässige Grenze anzuheben.

Der Oberbegriff von Anspruch 1 basiert auf US 5 876 550, die sich primär auf den schichtweisen Aufbau von Formkörpern aus pulverförmigem Material oder aus bereits vorab gebildeten Plättchen bezieht. Beim Aufbau von Formkörpern aus pulverförmigem Ausgangsmaterial wird Lasersintern zur Verfestigung angewendet. Es werden auch flüssige oder pastenförmige Materialen erwähnt. Bei der beschriebenen Verfahrensweise beginnt der Zyklus, indem ein Wagen unter der Pulverausgabe hindurchbewegt wird. Die dabei ausgegebene Schichtdicke wird durch die vertikale Einstellung eines Hubmechanismus zusammen mit einem Abstreifer definiert, unter dem der verfahrbare Wagen weiter nach rechts, vorbei an einer Walze zur Kompression des Pulvers schließlich bis hin zu einer Belichtungseinheit bewegt und anschließend selektiv belichtet wird.

Es ist Aufgabe der vorliegenden Erfindung, ein aufbauendes Verfahren und eine Vorrichtung zur Verarbeitung lichtpolymerisierbarer Materialien zum Aufbau von Formkörpern unter Anwendung einer lithographishen schnellen Prototypenbauweise so zu verbessern, dass damit auch höher viskose lichtpolymerisierbare Materialen, insbesondere keramikgefüllte Photopolymere, besser verarbeitet werden können.

Zur Lösung dieser Aufgabe dient die Vorrichtung nach Patentanspruch 1 und das Verfahren nach Patentanspruch 11. Vorteilhafte Ausführungsformen der Erfindung sind in den Unteransprüchen angegeben.

Die erfindungsgemäße Vorrichtung ist dadurch gekennzeichnet, dass die Steuereinheit dazu vorbereitet ist, die Dicke der Schicht, nämlich der Abstand zwischen der Bauplattform oder der letzten erzeugten Schicht und dem Wannenboden, über den Hubmechanismus einzustellen, indem er nach Nachführung von lichtpolymerisierbarem Material die Bauplattform, falls vorhanden mit den daran gebildeten Schichten, wieder in das nachgeführte lichtpolymerisierbare Material absenkt, so dass lichtpolymerisierbares Material aus dem verbleibenden Zwischenraum zum Wannenboden verdrängt wird, und den verbleibende Abstand zwischen der abgesenkten unteren Oberfläche und dem Wannenboden in vorgegebener Weise von der Steuereinheit gesteuert einstellt.

In einer bevorzugten Ausführungsform liegt in Bewegungsrichtung der Wanne zwischen der Zufuhreinrichtung und der Beleuchtungseinheit/Bauplattform eine Aufbringvorrichtung, insbesondere eine Rakel oder eine Rolle, deren Höhe über dem Wannenboden einstellbar ist, um auf die von der Zufuhreinrichtung ausgegebene Schicht aus lichtpolymerisierbarem Material einzuwirken und diese vor Erreichen des Zwischenraums zwischen Belichtungseinheit und Bauplattform auf eine einheitliche Dicke zu bringen.

Vorzugsweise ist in dem Hubmechanismus ein mit der Steuereinheit verbundener Kraftaufnehmer vorhanden, der dazu in der Lage ist, die von dem Hubmechanismus auf die Bauplattform ausgeübte Kraft zu messen und das Messergebnis an die Steuereinheit zu senden, wobei die Steuereinheit dazu vorbereitet ist, die Bauplattform mit einem vorgegebenen Kraftverlauf zu bewegen. Insbesondere bei keramikgefüllten lichtpolymerisierbaren Materialien können aufgrund der hohen Viskosität beim Herunterfahren in das oder beim Herauffahren der Bauplattform aus dem viskosen Material große Kräfte auftreten, die durch das Verdrängen beziehungsweise Ansaugen des viskosen Materials zwischen Bauplattform, und Wannenboden bedingt sind. Um die auftretenden Kräfte zu beschränken und dennoch eine möglichst hohe Absenk- beziehungsweise Anhebegeschwindigkeit zu ermöglichen, was den Produktionsprozess insgesamt beschleunigt, kann die Steuereinheit durch eine Kraftmessung den Hubmechanismus in optimaler Weise kraftgesteuert einsetzen.

Zur Ausführung der horizontalen Bewegung zwischen aufeinanderfolgenden Belichtungsschritten kann die Wanne mit ihrem Boden um eine zentrale Achse drehbar gelagert sein und durch einen Antrieb zwischen aufeinanderfolgenden Belichtungsschritten um einen vorgegebenen Winkel gedreht werden. Die Belichtungseinheit und die darüberliegende Bauplattform liegen radial gegenüber der zentralen Achse nach außen versetzt, so dass bei aufeinanderfolgenden Belichtungsschritten und dazwischen erfolgenden Drehbewegungsschritten schließlich eine Kreisringform des Wannenbodens überstrichen wird. Die Aufbringvorrichtung, z.B. Rakel oder Rolle oder Kombinationen daraus, liegt dann in Bewegungsrichtung zwischen Zufuhreinrichtung einerseits und Belichtungseinheit und Bauplattform andererseits, so dass der Belichtungsprozess nach Einwirken der Aufbringvorrichtung auf die Materialschicht erfolgt. Es können noch mehrere Rakel oder Rollen oder Kombinationen davon vorgesehen sein, um eine glattstreichende und eine walzende Einwirkung auf die Schicht zu nehmen. Die Aufbringvorrichtung kann insbesondere auch von einer Kante eines Ausgabekanals der Zufuhreinrichtung gebildet sein, die in einstellbarer Höhe über dem Wannenboden liegt.

Als Alternative zur Drehbewegung kann die Wanne entlang einer Linie versetzbar gelagert und ein Antrieb vorgesehen sein, der in der Lage ist, unter Steuerung der Steuereinheit die Wanne zwischen aufeinanderfolgenden Belichtungsschritten um einen vorgegebenen Weg zu verschieben.

Durch geeignete Wahl der Größe der Bewegungsschritte der Wanne können Strategien durchgeführt werden, die es erlauben, den Wannenboden an immer neuen Stellen zu belichten, so dass ein Anhaften des lichtpolymerisierbaren Materials am Wannenboden durch mehrfaches Belichten an derselben Stelle des Wannenbodens reduziert werden kann. Bei einer Drehbewegung der Wanne ist z.B. das Verhältnis Vollkreis (360°) zum Drehwinkelschritt vorzugsweise nicht ganzzahlig, insbesondere auch keine rationale Zahl. Alternativ können die Drehwinkelschritte auch in vorgegebener oder zufälliger Weise variiert werden, so dass die Polymeristation in immer anderen Bereichen der Wanne erfolgt.

Vorzugsweise werden in der Vorrichtung als Lichtquelle der Belichtungseinheit und/oder der weiteren Belichtungseinheit Leuchtdioden eingesetzt. Herkömmlich wurden bei Stereolithographieprozessen mit Maskenprojektion Quecksilberdampflampen eingesetzt, was aber Nachteile mit sich bringt, da die Leuchtdichte solcher Quecksilberdampflampen zeitlich und räumlich in beträchtlichem Ausmaß variieren kann, was häufig zu wiederholende Kalibrationen erforderlich machte. Daher ist der Einsatz von Leuchtdioden bevorzugt, die räumlich und zeitlich deutlich geringere Intensitätsvariationen zeigen. Gleichwohl ist die Vorrichtung in einer bevorzugten Ausführungsform dazu vorbereitet, in vorgegebenen Intervallen automatisch eine Korrektur oder Kompensation von Intensitätsvariationen durchzuführen. Dazu kann vorgesehen sein, dass die Belichtungseinheit einen Referenzsensor aufweist, der als ein das gesamte Belichtungsfeld abtastender Photosensor oder als eine das gesamte Belichtungsfeld erfassende CCD-Kamera ausgebildet ist. Die Steuereinheit ist dazu vorbereitet, in einem Kalibrationsschritt die Belichtungseinheit mit einem über das gesamte Belichtungsfeld vorgegebenen Ansteuerungssignal für die Belichtungseinheit zu belichten und das von dem Referenzsensor erfasste Intensitätsmuster über das Belichtungsfels zur Berechnung einer ortsabhängigen Kompensation zu verwenden, deren Anwendung eine gleichmäßige Intensität bei vorgegebenem Ansteuerungssignal im gesamten Belichtungsfeld ergibt. Anders ausgedrückt liefert die Kompensationsmaske ortsabhängig im Belichtungsfeld eine Beziehung zwischen der die Belichtungseinheit ansteuernden Signalamplitude und der jeweils daraus resultierenden tatsächlichen Intensität. Dadurch können zeitabhängig oder permanent auftretende Variationen der örtlichen Intensitätsverteilung im Belichtungsfeld kompensiert werden, indem die Belichtungseinheit von der Steuereinheit mit einer zu dem im letzten Kalibrationsschritt bei vorgegebenem Ansteuerungssignal tatsächlich erfassten Intensitätsmuster umgekehrten Maske ortsabhängig gesteuert wird, so dass eine gleichmäßige tatsächliche Intensität im Belichtungsfeld erreichbar ist.

Es könnene Leuchtdioden eingesetzt, werden die Licht mit unterschiedlichen Lichtwellenlängen emittieren. Damit ist es möglich, verschiedene Materialien mit unterschiedlichen Photoinitiatoren in derselben Vorrichtung zu verarbeiten.

Die Belichtungseinheit kann zur Emission von Licht mit einer mittleren Intensität von 1 mW/cm² bis 2000 mW/cm², insbesondere 5 Wm/cm² bis 50 mW/cm², ausgelegt sein.

Die Belichtungseinheit kann einen räumlichen Lichtmodulator auf, insbesondere ein von der Steuereinheit angesteuertes Mikrospiegelfeld aufweisen.

In Drehrichtung hinter dem Bereich der Belichtungseinheit und Bauplattform kann ein in vorgebbarer Höhe über dem Wannenboden positionierbarer Wischere liegen der für eine erneute Verteilung des Materials nach dem Polymerisationspozess ausgestaltet ist. Nach einem Belichtungsschritt bleibt nach Anheben der Bauplattform bleibt auf dem Wannenboden in der Materialschicht eine Zone ohne lichtpolymerisierbares Material zurück, die der Form der zuletzt gebildeten Schicht entspricht. Diese Zone wird durch erneutes Verteilen des Materials am Wannenboden spätestens beim Passieren des Wischers wieder aufgefüllt.

Die Vorrichtung kann dazu ausgestaltete sein, um bei Einleitung des Anhebens der Bauplattform nach einem Belichtungsschritt unter Steuerung der Steuereinheit eine relative Kippbewegung zwischen Bauplattform und Wannenboden auszuführen, wodurch eine schonendere Trennung der polymerisierten Materialschicht vom Wannenboden und damit eine geringe Belastung des Formkörpers erreicht wird.

In einer bevorzugten Ausführungsform sind eine Mehrzahl von Wannen, denen jeweils eine Zufuhreinrichtung für eines aus einer Mehrzahl von lichtpolymerisierbaren Materialien zugeordnet ist, und ein Antrieb vorhanden, der in der Lage ist, gesteuert durch die Steuereinheit jeweils eine der Wannen in einer ausgewählten vorgegebenen Reihenfolge zwischen die Belichtungseinheit und Bauplattform zu bewegen, wobei diese Bewegung eine lineare Bewegung bei serieller Anordnung mehrerer Wannen oder eine rotierende Bewegung bei der Anordnung mehrerer Wannen entlang einer gekrümmten Bahn ist, wodurch Schichten aus verschiedenen Materialien nach Maßgabe der ausgewählten vorgegebenen Reihenfolge aufgebaut werden können. Die unterschiedlichen Materialien können sich nach ihrer Farbe und sonstigen Materialeigenschaften unterscheiden, insbesondere nach optischen und mechanischen Eigenschaften, um so eine gewünschte Materialschichtung in dem Formkörper zu erreichen. Vorzugsweise wird beim Wechsel von einer Wanne zu einer anderen die Verschleppung von Material aus der einen Wanne in die andere Wanne unterdrückt, um die Verunreinigung der Materialien in den Wannen zu vermeiden. Dazu kann insbesondere vorgesehen sein, dass die Bauplattform mit den daran bereits gebildeten Schichten nach Anheben aus der einen Wanne durch eine Reinigungseinheit, insbesondere durch ein Bad mit Lösungsmittel, geführt wird, um anhaftendes nicht-polymerisiertes Material zu entfernen.

Eine Wanne im Sinne der im vorhergehenden Absatz beschriebenen Ausführungsform bedeutet ein abgeteilter, nach oben offener Aufnahmeraum für lichtpolymerisierbares Material. Insbesondere kann daher auch ein einzelner Wannenkörper durch Trennwände in mehrere voneinander getrennte Wannensegmente unterteilt sein und so eine Mehrzahl von Wannen im Sinne dieser Erfindung bilden.

Vorzugsweise weist die Zufuhreinrichtung eine Aufnahme zum Einsetzen einer Kartusche mit lichtpolymerisierbarem Material auf, um auf einfache Weise das für den jeweiligen Bauprozess gewünschte lichtpolymerisierbare Material zum Einsatz bringen zu können.

Die Unterseite der Bauplattform kann mit einer Strukturierung z.B. aus Noppen, Rillen oder Nuten versehen sein die in oder auf der unteren Oberfläche selbst und/oder in oder auf einer darauf aufgebrachten Beschichtung oder Folie vorgesehen ist. Der wenigstens teilweise licht-durchlässige Wannenboden kann durch eine einen Polymerisationsinhibitor enthaltende Folie oder Platte gebildet sein. Die Bauplattform kann insbesondere aus einem hochtemperaturbeständigen Material bestehen, vorzugsweise aus Zirkoniumoxid, Aluminiumoxid, Saphirglas oder Quarzglas.

Ein erfindungsgemäßes Verfahren der oben genannten Art ist dadurch gekennzeichnet, dass.

In einer bevorzugten Ausführungsform wird die Verteilung des zugeführten lichtpolymerisierbaren Materials in einer vorgegebenen Schichtdicke auf dem Wannenboden, insbesondere auf dem Belichtungsfeld, während des Versetzens der Wanne aus der Zufuhrstellung in die Belichtungsstellung mit Hilfe einer zwischen der Zufuhreinrichtung und der Belichtungseinheit sowie die Steuereinheit dazu vorbereitet ist, die Dicke der Schicht, nämlich der Abstand zwischen der Bauplattform oder der letzten erzeugten Schicht und dem Wannenboden, über den Hubmechanismus einzustellen, indem er nach Nachführung von lichtpolymerisierbarem Material die Bauplattform, falls vorhanden mit den daran gebildeten Schichten, wieder in das nachgeführte lichtpolymerisierbare Material absenkt, so dass lichtpolymerisierbares Material aus dem verbleibenden Zwischenraum zum Wannenboden verdrängt wird, und den verbleibende Abstand zwischen der abgesenkten unteren Oberfläche und dem Wannenboden in vorgegebener Weise von der Steuereinheit gesteuert einstellt. der Bauplattform angeordneten Aufbringvorrichtung, zum Beispiel einer Rakel oder einer Rolle, deren Höhe über dem Wannenboden einstellbar ist, vorgenommen.

Vorzugsweise erfolgt das Verschieben der Bauplattform durch Anheben und/oder Absenken kraftgesteuert nach Maßgabe eines vorgegebenen Kraftverlaufs, d.h. die von dem Hubmechanismus auf die Bauplattform ausgeübte Kraft wird auf vorgegebene Kriterien hin beschränkt. Dadurch können die auftretenden Kräfte, die insbesondere bei höher viskosen Materialien erheblich sein können und die den Aufbau des Formkörpers beschädigen könnnten, beschränkt werden und dennoch eine möglichst hohe Absenk- bzw. Anhebegeschwindigkeit der Bauplattform in das bzw. aus dem lichtpolymerisierbaren Material ermöglicht werden, was die Geschwindigkeit des Produktionsprozesses insgesamt optimiert, da immer mit der höchsten Geschwindigkeit, bei der Beschädigungen noch vermieden werden, gearbeitet werden kann.

Um den Aufbau von Formkörpern unter Verwendung von verschiedenen Materialien zu ermöglichen, kann in aufeinanderfolgenden Schichtaufbauschritten in einer auswählbaren Reihenfolge eine Mehrzahl von verschiedenen Materialien zum Schichtaufbau verwendet werden, indem eine Mehrzahl von Wannen, denen jeweils eine Zufuhreinrichtung mit einem aus der Mehrzahl von Materialien zugeordnet ist, in einer ausgewählten Reihenfolge zwischen Belichtungseinheit und Bauplattform bewegt wird, wobei diese Bewegung eine lineare Bewegung bei serieller Anordnung mehrerer Wannen oder eine rotierende Bewegung bei Anordnung mehrerer Wannen entlang einer gekrümmten Bahn ist. Die unterschiedlichen Materialien können sich nach ihrer Farbe und sonstigen Materialeigenschaften unterscheiden, insbesondere nach optischen und mechanischen Eigenschaften, um so eine gewünschte Materialschichtung in dem Formkörper zu erreichen.

In einer Ausführungsform wird für die Herstellung des Formkörpers ein partikelgefülltes, beispielsweise keramikgefülltes, lichtpolymerisierbares Material verwendet und aus dem fertigen Formkörper die organischen Bestandteile ausgebrannt werden, bevor der Formkörper gesintert wird. Vorzugsweise kann der Partikelanteil des lichtpolymerisierbaren Materials aus einer Oxidkeramik oder einer Glaskeramik besteht.

Der mit dem erfindungsgemäßen Verfahren herzustellende Formkörper kann zum Beispiel ein Grünling für eine Dentalrestauration sein, wobei das lichtpolymsrisierbare Material in diesem Fall zum Beispiel ein keramikgefülltes Photopolymer sein kann. Die Bauplattform weist vorzugsweise eine Platte aus einem hochtemperaturbeändigen Material auf, vorzugsweise aus Zirkonoxid, Aluminiumoxid, Saphirglas oder Quarzglas. Auf einen solchen keramischen Träger kann eine transparente Polymerfolie aufgeklebt sein, um die Bauplattform zu bilden, wobei die Polymerfolle auf der Seite, die mit dem Photopolymer in Kontakt kommt, mit Strukturierungen wie Noppen, Rillen oder dergleichen versehen sein kann, um eine bessere Anheftung des keramikgefüllten Photopolymers zu erreichten. Nach dem sukressiven Aufbau des Grünlings kann die Bauplattform mit dem daran anhafteten Grünling entnommen und direkt in den Sinterofen eingebracht werden. Beim Entbindern des Bauteils zersetzt sich neben der organischen Harzkomponente auch die Polymerfolie der Bauplattform und der gesinterte Keramikkörper liegt somit nach dem Sintern lose auf der Platte der Bauplattform und kann entnommen werden.

Es kann bei dem erfindungsgemäßen Verfahren zur Merstellung des Formteils ein Kunststoff verwendet werden, wobei das Formteil nach dessen Herstellung in einer Einbettmasse eingebettet und nach Erstarrung der Einbettmasse ausgebrannt wird und, wobei die entstandenen Hohlräume in der Einbettmasse ein anderes Material, insbesondere ein Dentalkeramikmaterial oder Metall oder eine Legierung eingepresst wird.

Bei einem Verfahren kann für die Herstellung des Formteils ein Dentalkomposit verwendet werden und das Formteil nach dessen Herstellung vergütet und anschließend poliert oder lackiert und anschließend vergütet werden.

Bei einem erfindungsgemäßen Verfahren kann der Keramikanteil des keramikgefüllten Photopolymers aus einer Oxidkeramik oder einer Glaskeramik, insbesondere Zirkoniumoxid, Aluminiumoxid, Lithiumdisilikat, Leuzitglaskeramik, Apatit-Glaskeramik oder Mischungen daraus, bestehen.

Bei einem erfindungsgemäßen Verfahren wird vorzugsweise nach Durchführung eines Belichtungsschrittes bei ruhender Wanne die Bauplattform angehoben, um die gebildete Schicht vom Wannenboden abzuheben. Es kann dazu eine leichte relative Kippbewegung zwischen Bauplattform und Wannenboden durchgeführt werden, nach der Polymerisation eine Anhaftung der gebildeten Schicht an dem Wannenboden bei senkrechtem Ziehen nach oben zu einer zu starken mechanischen Belastung der gerade gebildeten Schicht beziehungsweise des gesamten Bauteils führen könnte. Nach Anheben der Bauplattform bleibt auf dem Wannenboden in der Materialschicht eine Zone ohne lichtpolymerisierbares Material zurück, die der Form der zuletzt gebildeten Schicht entspricht. Diese Zone wird durch erneutes Verteilen des Materials am Wannenboden spätestens beim Passieren der Rakel oder der Rolle oder durch einen optionalen zusätzlichen Wischer wieder aufgefüllt.

Die Erfindung wird im Folgenden anhand eines Ausführungsbeispiels mit Bezug auf die Zeichnungen beschrieben, in denen:
- Figur 1: eine seitliche Draufsicht, teilweise im Schnitt auf eine erfindungsgemäße Vorrichtung zeigt,
- Figur 2: eine Draufsicht auf die Vorrichtung aus Figur 1 von oben zeigt,
- Fig. 3 bis 5: zeigen eine Teilansicht der Vorrichtung aus Fig. 1 im Bereich von Bauplattform und Wannenboden in aufeinanderfolgenden Arbeitsschritten,
- Fig. 6: zeigt auf Draufsicht von oben für eine zweite Ausführungsform der Vorrichtung,
- Fig. 7: eine seitliche Draufsicht, teilweise im Schnitt, auf die Vorrichtung der zweiten Ausführungsform aus Fig. 6 zeigt, und
- Fig. 8: eine Draufsicht von oben auf eine dritte Ausführungsform der Vorrichtung zeigt.

Das folgende Ausführungsbeispiel bezieht sich auf die Herstellung eines Grünlings für eine Dentalrestauration.

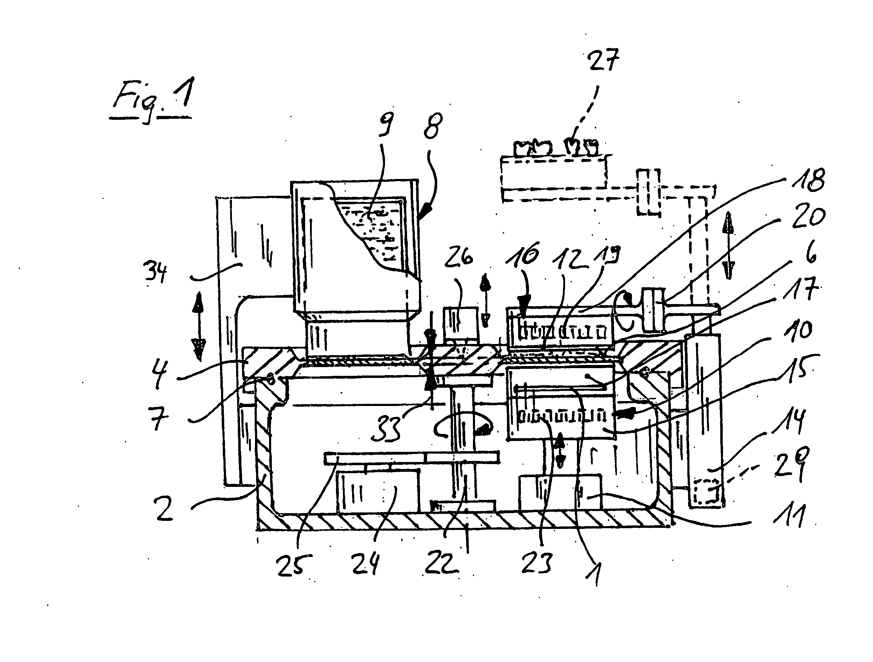

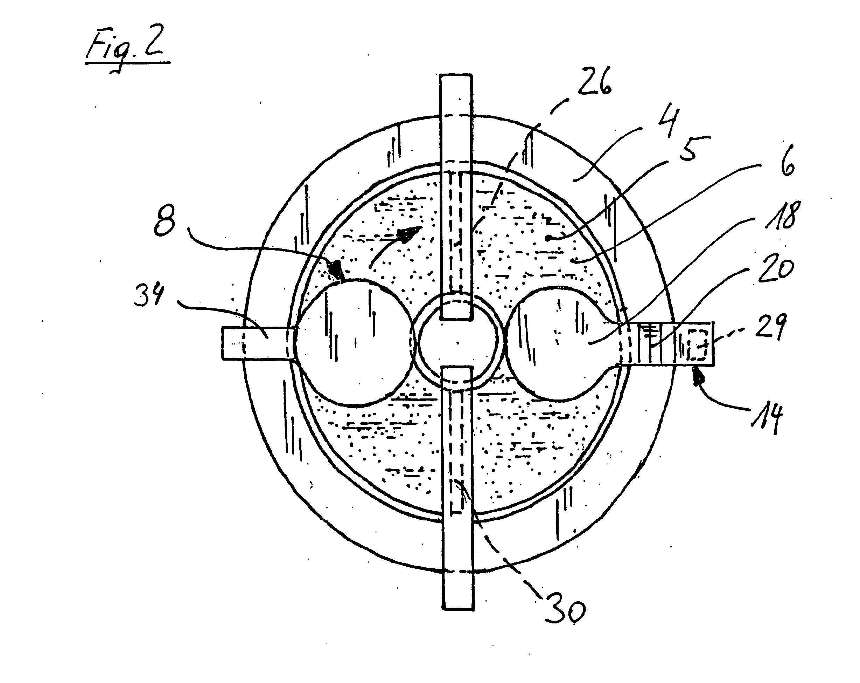

Es werden zunächst mit Bezug auf die Fig. 1 und 2 die Hauptkomponenten der Vorrichtung beschrieben.

Die Vorrichtung weist in der in Fig. 1 und 2 dargestellten Ausführungsform ein Gehäuse 2 auf, das zur Unterbringung und Anbringung der übrigen Komponenten der Vorrichtung dient. Die Oberseite des Gehäuses 2 wird durch eine Wanne 4 bedeckt, die zumindest in den für Belichtungen vorgesehenen Bereichen einen lichtdurchlässigen und ebenen Wannenboden hat.

Unter dem Wannenboden 4 ist in dem Gehäuse 2 eine Belichtungseinheit 10 vorgesehen, die gesteuert von einer Steuereinheit 11 ein vorgegebenes Belichtungsfeld an der Unterseite des Wannenbodens 6 selektiv mit einem Muster in gewünschter Geometrie belichten kann.

Vorzugsweise weist die Belichtungseinheit 10 eine Lichtquelle 15 mit einer mehreren Leuchtdioden 23 auf, wobei im Belichtungsfeld vorzugsweise eine Lichtleistung von etwa 15 bis 20 mW/cm² erreicht wird. Die Wellenlänge des von der Belichtungseinheit abgestrahlten Lichts liegt vorzugsweise im Bereich von 400 bis 500 nm. Das Licht der Lichtquelle 15 wird über einen Lichtmodulator 17 ortsselektiv in seiner Intensität moduliert und in dem resultierenden Intensitätsmuster mit gewünschter Geometrie auf das Belichtungsfeld an der Unterseite des Wannenbodens 6 abgebildet. Als Lichtmodulatoren können verschiedene Arten von sogenannten DLP-Chips (digital light processing chips) dienen, wie zum Beispiel Mikrospiegelfelder, LCD-Felder und dergleichen. Alternativ kann als Lichtquelle ein Laser verwendet werden, dessen Lichtstrahl über einen beweglichen Spiegel, der von der Steuereinheit gesteuert werden kann, das Belichtungsfeld sukzessive abtastet.

Über der Belichtungseinheit 10 ist jenseits des Wannenbodens 6 eine Bauplattform 12 vorgesehen, die von einem Hubmechanismus 14 mit einem Trägerarm 18 gehalten wird, so dass sie in höhenverstellbarer Weise über dem Wannenboden 6 über der Belichtungseinheit 10 gehalten wird. Die Bauplattform 12 ist ebenfalls transparent oder transluzent.

Ober der Bauplattform 12, die lichtdurchlässig ausgebildet ist, ist eine weitere Belichtungseinheit 16 angeordnet, die ebenfalls von der Steuereinheit 11 angesteuert wird, um zumindest bei der Bildung der ersten Schicht unter der Bauplattform 12 auch Licht von oben durch die Bauplattform 12 einzustrahlen, um dadurch eine sichere und verlässlich reproduzierbare Polymerisation und Anhaftung der ersten polymerisierten Schicht an der Bauplattform zu erreichen.

Oberhalb der Oberfläche der Wanne 4 ist ferner eine Zufuhreinrichtung 8 mit einem Reservoir in Form einer austauschbaren Kartusche 9 gefüllt mit lichtpolymerisierbarem Material vorgesehen. Aus der Zufuhreinrichtung 8 kann sukzessive unter Steuerung der Steuereinheit 11 keramikgefülltes lichtpolymerisierbares Material auf den Wannenboden 6 ausgeben werden. Die Zufuhreinrichtung wird von einem höhenverstellbaren Träger 34 gehalten.

Die Wanne 4 ist an dem Gehäuse 2 mit einem Lager 7 um eine vertikale Achse 22 drehbar gelagert. Es ist ein Antrieb 24 vorgesehen, der von der Steuereinheit 11 angesteuert die Wanne 4 in eine gewünschte Drehstellung einstellt.

In Drehrichtung zwischen Belichtungseinheit 12 und Zufuhreinrichtung 8 kann ein Wischer 30 mit einstellbarer Höhe über dem Wannenboden 6 angeordnet sein, der unterschiedliche Funktionen übernehmen kann, wie weiter unten erläutert.

Wie aus Fig. 2 ersichtlich, liegt zwischen der Zufuhreinrichtung 8 und der Belichtungseinheit 12 oberhalb des Wannenbodens 6 eine Aufbringvorrichtung 26, hier in Form einer Rakel 26, die in einstellbarer Höhe über dem Wannenboden 6 positionierbar ist, um so Material, das aus der Zufuhreinrichtung 8 auf den Wannenboden 6 ausgegeben worden ist, durch Vorbeibewegung and der Aufbringvorrichtung glattzustreichen, bevor es die Belichtungseinheit 12 erreicht, um dadurch eine gleichmäßige Verteilung und vorgegebene Schichtdicke sicherzustellen. Alternativ oder zusätzlich zu der Rakel können eine oder mehrere Walzen oder weitere Rakel zu der Aufbringvorrichtung gehören, um in glättender Weise auf die Materialschicht einzuwirken.

Der die Bauplattform 12 tragende Schwenkarm 18 ist über ein Drehgelenk 20 mit dem vertikal verschiebbaren Teil des Hubmechanismus 14 verbunden. In dem Hubmechanismus 14 ist ferner ein Kraftaufnehmer 29 vorgesehen, der die von dem Hubmechanismus 14 beim Absenken bzw. Anheben der Bauplattform 12 auf diese ausgeübte Kraft misst und das Messergebnis zu der Steuereinheit 12 sendet. Diese ist wie weiter unten beschrieben dazu ausgestaltet, um den Hubmechanismus 14 nach eine vorgegebenen Kraftverlauf zu steuern, z.B. die auf die Bauplattform 12 ausgeübte Kraft auf einem Maximalwert zu begrenzen.

Die Funktionsweise der in den Figuren 1 und 2 dargestellten Vorrichtung kann zusammenfassend folgendermaßen beschrieben werden. Aus der Zufuhreinrichtung 8 wird gesteuert durch die Steuereinheit eine vorgegebene Materialmenge von keramikgefülltem lichtpolymerisierbaren Material 5 auf den Wannenboden 6 ausgegeben. Durch Ansteuerung des Antriebs 24 veranlasst die Steuereinheit 11 eine Drehung des Wannenbodens 6 um die Drehachse 22, so dass das ausgegebene Material die Aufbringvorrichtung 26, hier einer Rakel, passiert, die das lichtpolymerisierbare Material auf eine vorgegebene Schichtdicke 32 glättet, die durch die Höheneinstellung der Aufbringvorrichtung 26 bestimt wird. Weiter wird das Material durch Drehung der Wanne 4 bis in den Bereich zwischen der Bauplattform 12 und der Belichtungseinheit 10 bewegt.

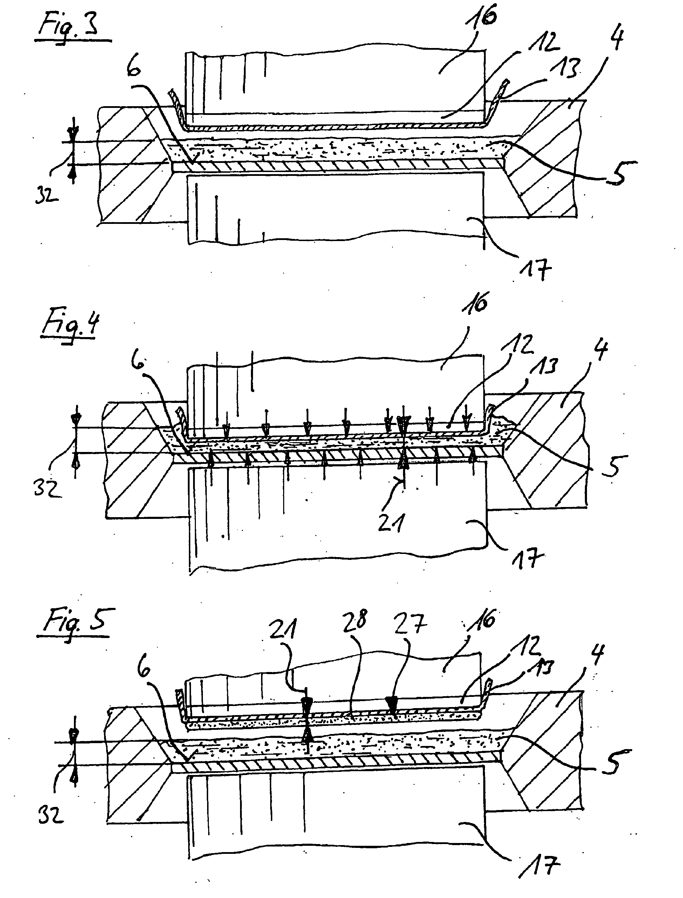

Hier folgt nun, nach Stoppen der Drehbewegung der Wanne 4, das Absenken der Bauplattform 12 in die auf dem Wannenboden 6 gebildete Schicht aus lichtpolymerisierbaren Material 5, was im Folgenden anhand der Fig. 3 bis 5 erläutert wird. In dem in Fig. 3 gezeigten Zustand ist auf dem Wannenboden eine Schicht aus lichtpolymerisierbaren Material 5 mit einer vorgegebenen Dicke 32 gebildet, wobei sich die Bauplattform 12 in diesem Zustand noch oberhalb der Schicht 5 befindet. An der Unterseite der Bauplattform 12 ist eine Folie 13 angebracht, auf die weiter unten eingegangen wird. Aus dem in Fig. 3 dargestellten Zustand erfolgt nun ein Absenken der Bauplattform 12 durch den von der Steuereinheit 11 gesteuerten Hubmechanismus 14, so dass die Bauplattform 12 mit der Folie 13 an der Unterseite in die Schicht aus lichtpolymerisierbaren Material 5 eintaucht und dieses bei weiterem Absenken teilweise aus dem Zwischenraum zwischen der Folie 13 und der oberen Oberfläche des Wannenbodens 6 verdrängt. Durch den Hubmechanismus 14 wird die Bauplattform 12 von der Steuereinheit 11 gesteuert so zu dem Wannenboden abgesenkt, dass eine Schicht mit einer präzise vorgegebenen Schichtdicke 21 zwischen Bauplattform und Wannenboden definiert wird. Dadurch lässt sich die Schichtdicke 21 des zu polymerisierenden Materials präzise steuern.

Beim Eintauchen der Bauplattform 12 in das lichtpolymerisierbare Material 5 und dem weiteren Absenken in die in Fig. 4 gezeigte Stellung können insbesondere bei Verdrängung von höher viskosem Material große Kräfte auftreten, wenn das Absenken der Bauplattform mit vorgegebener Geschwindigkeit erfolgen würde. Um zu verhindern, dass die aufzubauenden Materialschichten beim Absenken der Bauplattform 12 in das lichtpolymerisierbare Material 5 zu großen Kräften ausgesetzt ist, ist in dem Hubmechanismus der oben erwähnte Kraftaufnehmer 29 vorhanden, der die auf die Bauplattform 12 ausgeübte Kraft misst und das Messsignal an die Steuereinheit 11 sendet. Diese ist nun dazu vorbereitet, den Hubmechanismus so zu steuern, dass die von dem Kraftaufnehmer 29 erfasste Kraft vorgegebenen Kriterien folgt, insbesondere dass die ausgeübte Kraft eine vorgegebene Maximalkraft nicht überschreitet. Dadurch kann das Absenken der Bauplattform 12 das lichtpolimerisierbare Material 5 hinein und das Anheben der Bauplattform daraus heraus einerseits so gesteuert durchgeführt werden, dass die auf die Bauplattform und damit auch auf die bereits gebildeten Schichten ausgeübten Kräfte begrenzt werden und dadurch Beschädigungen beim Aufbau des Formkörpers vermieden werden, und andererseits das Absenken und Anheben der Bauplattform 12 mit der maximal möglichen Geschwindigkeit, bei der Beschädigungen des aufzubauenden Formkörpers gerade noch vermieden werden, durchgeführt werden können, um so eine optimale Prozessgeschwindigkeit zu erreichen.

Nach dem Absenken der Bauplattform in das lichtpolimerisierbare Material 5 in die in Fig. 4 gezeigte Stellung folgt nun der erste Belichtungsschritt zur Polymerisation der ersten Schicht 28 an der Bauplattform 12, wobei dabei auch die weitere Belichtungseinheit 16 betätigt wird (gleichzeitig oder zeitlich versetzt), um ein sicheres Anhaften der ersten Polymerisationsschicht 28 an der Bauplattform zu gewährleisten. Während des Belichtungsprozesses bleibt die Wanne 4 ruhig gehalten, d.h. der Antrieb 24 bleibt abgeschaltet. Nach dem Belichten einer Schicht wird die Bauplattform 12 durch den Hubmechanismus 14 angehoben. Dabei wird vorzugsweise aber zunächst vor dem Anheben der Bauplattform 12 eine relative Kippbewegung zwischen der Bauplattform 12 und dem Wannenboden 6 durchgeführt. Diese leichte Kippbewegung soll zu einer mechanisch wenig belastenden Ablösung der zuletzt polymerisierten Schicht des Formkörpers 27 vom Wannenboden 6 dienen. Nach dieser Kippbewegung und Ablösung der zuletzt gebildeten Schicht wird die Transportplattform um eine vorgegebene Strecke angehoben, wie in Fig. 5 gezeigt, so dass die zuletzt gebildete Schicht an dem Formkörper 27 über dem lichtpolymerisierbaren Material 5 liegt.

Anschließend wird wieder Material aus der Zufuhreinrichtung 8 ausgegeben und die Wanne 4 durch den Antrieb 24 um einen vorgegebenen Drehwinkel gedreht, wobei das sich an der Rakel vorbeibewegende Material wieder auf eine einheitliche Schichtdikke gebracht wird. Diese Schrittfolge wird unter Bildung von aufeinanderfolgenden Schichten vorgegebener Konturform solange fortgesetzt, bis die Aufeinanderfolge von Schichten mit jeweils vorgegebener Geometrie die gewünschte Form des keramischen Grünlings ergibt.

Der hinter der Belichtungseinheit vorgesehene Wischer 30 über dem Wannenboden 6 kann verschiedene Funktionen haben. Er kann zum Beispiel, wenn er ganz auf den Wannenboden 6 abgesenkt ist, dazu dienen, das Material von dem Wannenboden zu sammeln und abzuleiten oder in die Zufuhreinrichtung 8 zurückzuführen, was am Ende eines Bauprozesses erfolgen sollte. Während eines Bauprozesses dient der Wischer 30, wenn er leicht gegenüber dem Wannenboden 6 angehoben ist, dazu, das Material wieder zu verteilen, insbesondere wieder Material in die "Löcher" zu schieben, die durch einen Belichtungsprozess in der Materialschicht nach Anheben der Bauplattform 12 entstanden sind.

Nach der Beendigung eines Bauprozesses kann die Bauplattform 12 mit der darüber angebrachten Belichtungseinheit 16 insgesamt durch Schwenken des Schwenkarms 18 um das Gelenk 20 nach oben geschwenkt werden, wie in Figur 1 gestrichelt angedeutet ist. Danach besteht besser Zugang zu der Wanne 4, um diese zum Beispiel reinigen oder austauschen zu können.

Nach dem beschriebenen Aufbau des Grünlings aus polymerisiertem keramikgefüllten Material muss dieser aus der Vorrichtung entnommen und einem Brennofen zugeführt werden, in dem durch die Temperaturbehandlung eine Zersetzung des polymerisierten Bindemittels (Entbindern) herbeigeführt und eine Sinterung des Keramikmaterials durchgeführt wird. Zur Vereinfachung der Handhabung des aufgebauten Körpers ist die Bauplattform so gestaltet, dass sie von dem Trägerarm 18 leicht lösbar ist. Dann kann die Bauplattform mit dem daran haftenden aufgebauten keramikgefüllten Formkörper 27 von ihrem Träger 18 abgenommen und in einem Brennofen platziert werden. Um diese bevorzugte einfache Entnahme des aufgebauten Dentalrestaurationskörpers aus keramikgefüllten Polymer zu ermöglichen, muss die Bauplattform aber aus einem hochtemperaturbeständigen Material hergestellt sein, wozu zum Beispiel Zirkonoxid, Aluminiumoxid, Saphirglas oder Quarzglas dienen können. Als Alternative dazu ist eine selbstklebende, transparente Folie möglich, welche auf der dem Photopolymer zugewandten Seite für eine bessere Anhaftung mit Noppen, Rillen, Ritzen etc. strukturiert sein kann, und welche nach dem Bauprozess durch einfaches Ablösen von der Bauplattform oder samt der Bauplattform abgenommen und samt der Folie in den Brennofen zur Entbinderung/Sinterung gegeben werden kann.

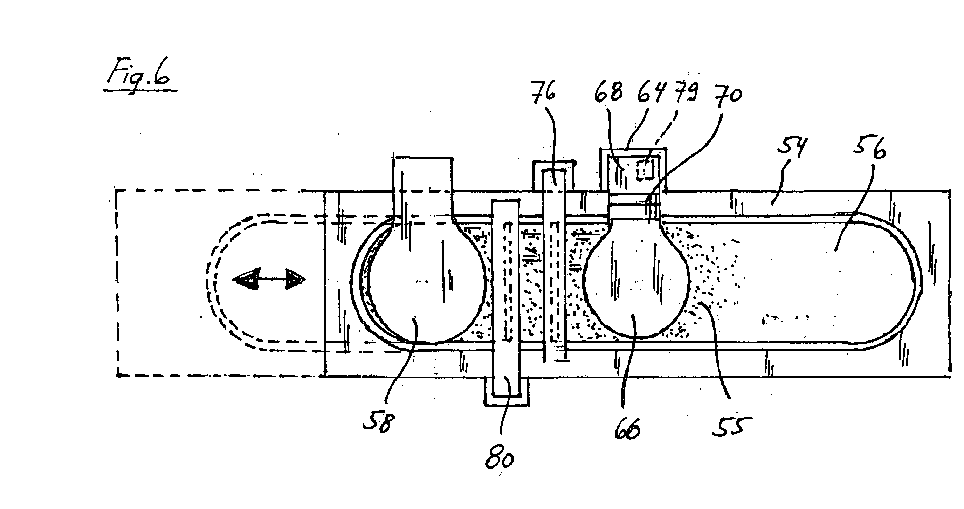

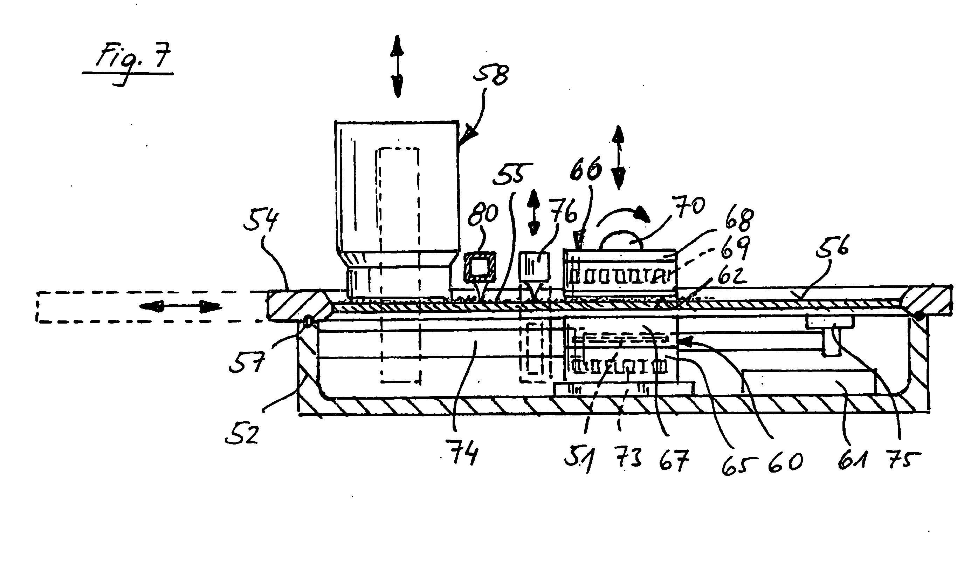

Fig. 6 und 7 zeigen gegenüber der Vorrichtung aus den Fig. 1 und 2 mit drehbarer Wanne eine alternative Ausführungsform, in der die Wanne 54 linear hin und her beweglich ausgestaltet ist. In dieser Ausführungsform ist am Gehäuse 52 eine Wanne 54 linear beweglich in einem Lager 57 gelagert. Oberhalb der Wanne 54 ist die Zufuhreinrichtung 58 in höhenverstellbarer Weise angeordnet. In Bezug auf die lineare Bewegungsrichtung versetzt gegenüber der Zufuhreinrichtung 58 ist oberhalb der Wanne 54 die Bauplattform 62 an einem Schwenkarm 68 gehalten, der zu einem Hubmechanismus 64 gehört. Der Schwenkarm 68 ist wiederum mit einem Drehgelenk 70 versehen, das es ermöglicht, das der Schwenkarm 68 nach Anheben in vertikaler Richtung sich um 180° drehen lässt, wonach die Bauplattform 62 mit dem darauf aufgebauten Formkörper nach oben zeigt und in dieser Stellung leicht gehandhabt werden kann.

Unterhalb der Bauplattform 62 und des Wannenbodens 56 befindet sich die Belichtungseinheit 60, in der eine Lichtquelle 65 mit Leuchtdioden 73 angeordnet ist. Das Licht der Lichtquelle 65 wird über einen Lichtmodulator 67 und durch den transparenten Wannenboden 56 auf die Bauplattform 62 projiziert. In der Belichtungseinheit 60 ist auch ein Referenzsensor 51 vorhanden, der in einem Kalibrationsschritt dazu verwendet wird, um bei Ansteuerung des Lichtmodulators in der Weise, das keine Ortsabhängigkeit oder Modulation über das Belichtungsfeld erfolgen soll, die tatsächliche Intensitätsverteilung in dem Belichtungsfeld aufzunehmen. Aus der Abweichung der tatsächlich erfassten Intensitätsverteilung lässt sich dann durch Umkehrung ein Ansteuerungsprofil (Kompensationsmaske) für den Lichtmodulator berechnen, das für eine tatsächlich gleichmäßige Intensität über das Belichtungsfeld sorgt. Ein entsprechender Referenzsensor 1 ist auch bei der Ausführungsform aus Fig. 1 und 2 vorhanden.

In Bewegungsrichtung der Wanne 54 (angedeutet durch den Doppelpfeil in den Fig. 6 und 7) hintereinander sind eine höhenverstellbar über dem Wannenboden 56 gehaltene Aufbringvorrichtung 76, hier in Form einer Rakel, deren Unterkante in einstellbarem Abstand zur Oberfläche des Wannenbodens liegt, und ein Wischer 80 angeordnet.

Die Funktionsweise der in den Fig. 6 und 7 gezeigten Vorrichtung entspricht bis auf den Unterschied der linear hin- und hergehenden Bewegung der Wanne 54 anstelle der Drehbewegung der Wanne 4 den zuvor in Bezug auf die Fig. 3 bis 5 beschriebenen Verfahrensschritten. Zunächst wird die Wanne 54 aus der in Fig. 7 gezeigten Stellung, veranlasst durch die Steuereinheit 61, die den Antrieb 75 betätigt, nach links in die durch gestrichelte Linien gezeigte Stellung (Zufuhrstellung) verschoben. Dabei wird durch die Zufuhreinrichtung 58 lichtpolymerisierbares Material auf den Wannenboden 56 ausgegeben, wobei Menge und zeitlicher Verlauf der Ausgabe ebenfalls von der Steuereinheit 61 vorgegeben werden. Darauf veranlasst die Steuereinheit 61 durch Umkehr des Antriebs 75, dass die Wanne 54 wieder zurück verschoben wird. Dabei passiert das auf den Wannenboden 56 ausgegebene lichtpolymerisierbare Material 55 zunächst den Wischer 80 und dann die Aufbringvorrichtung 76 die für eine gleichmäßige Verteilung und eine einheitliche Schichtdicke des lichtpolymerisierbaren Materials 55 sorgen, bevor dies den Zwischenraum zwischen Bauplattform 62 und Belichtungseinheit 60 erreicht. Danach wird der Antrieb 75 gestoppt, woraufhin die Schrittfolge wie oben im Zusammenhang mit den Fig. 3 bis 5 beschrieben durchlaufen wird, wobei die Bauplattform 62 in die Schicht aus lichtpolymerisierbaren Material 55 eintaucht und durch Einstellen des Abstands zum Wannenboden eine Schicht mit vorgegebener Dicke zwischen Bauplattform und Wannenboden definiert. Danach erfolgt die Betätigung der Belichtungseinheit 60 zur Erzeugung eines Belichtungsmusters mit vorgegebener Geometrie, wobei in diesem Zusammenhang zumindest bei der Erzeugung der ersten Schicht direkt an der Bauplattform 62 auch die weitere Belichtungseinheit 66 mit ihren Leuchtdioden 69 betätigt wird, um die erste Schicht durch Belichtung durch die lichtdurchlässige Bauplattform hindurch zu belichten und dadurch eine vollständige Polymerisation und ein verlässliches Anhaften der ersten Schicht an der Bauplattform 62 zu erreichen.

Nach Polymerisation der ersten Schicht mit gewünschter Geometrie wird die Bauplattform 62 durch Betätigen des Hubmechanismus 64 wieder angehoben, so dass die gebildete polymerisierte Schicht über den Spiegel des lichtpolymerisierbaren Materials 55 hinaus angehoben wird.

Daraufhin wiederholt sich die beschriebene Schrittfolge, d.h. die Wanne 54 wird wieder nach links verschoben, lichtpolymerisierbares Material aus der Zufuhreinrichtung 58 abgegeben und dieses beim Zurückschieben der Wanne 54 nach rechts durch Wischer 80 und Aufbringvorrichtung 76 gleichmäßig verteilt, woraufhin nach Abschalten des Antriebs 75 der Hubmechanismus 64 die Bauplattform 62 wieder absenkt, so dass die zuletzt gebildete polymerisierte Schicht in das lichtpolymerisierbare Material 55 eintaucht und auf einen vorgegebenen Abstand über dem Wannenboden 56 gebracht wird, um die nun in dem Zwischenraum liegende Materialschicht im nächsten Belichtungsschritt zu polymerisieren. Die Schrittweite der hin- und hergehenden Bewegung kann natürlich wieder variiert werden, um zu vermeiden, dass die Polymerisation immer über derselben Stelle des Wannenbodens durchgeführt wird.

Der Hubmechanismus 64 ist wiederum mit einem Kraftaufnehmer 79 versehen, dessen Messwerte von der Steuereinheit 61 wie oben im Zusammenhang mit der ersten Ausführungsform beschrieben zur Begrenzung der auf die Bauplattform ausgeübten Kraft beim Absenken und Anheben der Bauplattform verwendet werden.

Vorzugsweise können auch Verfahren angewendet werden, bei denen mehrere verschiedene keramikgefüllte photopolymerisierbare Materialien zum Aufbau des Grünlings verwendet werden. Dies kann zum Beispiel dadurch geschehen, dass eine Mehrzahl von Wannen mit jeweils zugeordnetem Reservoir mit verschiedenen Materialien vorgesehen sind. Diese können dann nach Art eines Wechselträgers zu der Belichtungseinheit und der Bauplattform bewegt werden, um in vorgegebener Reihenfolge verschiedene Materialien zu verarbeiten. Dazu können die mehreren Wannen zum Beispiel seriell hintereinander an einem Träger angeordnet sein, der dann linear bezüglich der Belichtungseinheit und der Bauplattform beweglich ist, um jeweils eine gewünschte Wanne bereitzustellen. Alternativ kann eine Mehrzahl von drehbaren Wannen, von denen eine in den Figuren 1 und 2 dargestellt ist, auf einem Kreisring einer größeren Platte angeordnet sein, die ihrerseits wiederum drehbar ist, um jeweils eine gewünschte Wanne durch Einstellung der Drehstellung der Scheibe in die Position zwischen Belichtungseinheit und Bauplattform zu bringen, in der dann der Polymerisationsschicht der jeweiligen Schicht durchgeführt wird.

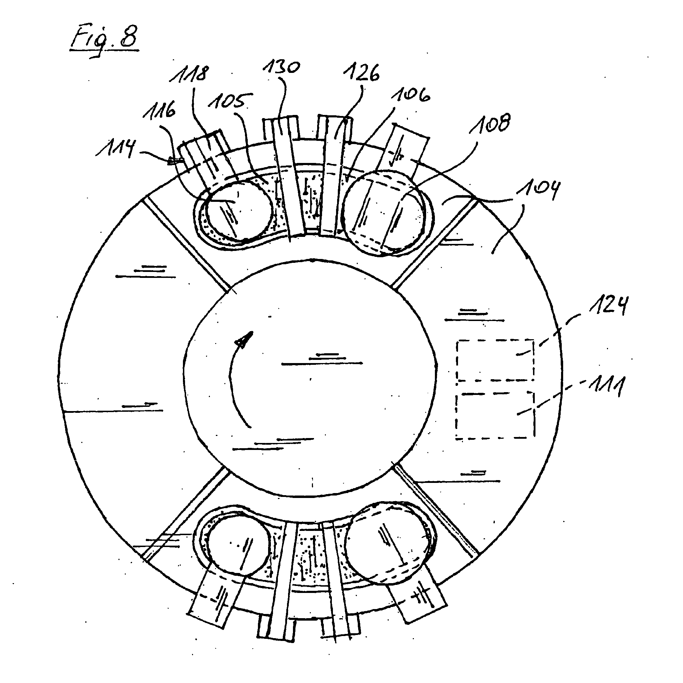

Eine spezielle Ausführungsform einer Vorrichtung, mit der verschiedene lichtpolymerisierbare Materialien zum Aufbau eines Formkörpers verwendet werden können, ist in schematischer Draufsicht von oben in Fig. 8 gezeigt. Hier sind auf einer Drehscheibe in kreisringförmiger Anordnung vier Wannen 104 vorhanden. Die Anordnung von Zufuhreinrichtung 108, der weiteren Belichtungseinheit 116 an einem Hubmechanismus 114 sowie des dazwischen liegenden Wischers 130 und der Aufbringvorrichtung 126 ähnelt weitgehend der Anordnung der Vorrichtung aus den Fig. 6 und 7, mit Ausnahme der Tatsache, dass die Komponenten nicht entlang einer linearen Strecke angeordnet und die Wanne linear beweglich ist, sondern die Komponenten entlang eines Kreisringsegments angeordnet sind und die Wanne entsprechend die Form eines Kreisringsegments hat. Zwischen aufeinanderfolgenden Belichtungsschritten in derselben Wanne 104 wird die Wanne hin- und hergehend um einen Winkel von etwa weniger als 90° bewegt, so dass sich wiederum eine hin- und hergehende Bewegung zwischen Zufuhreinrichtung 118 und der unter der weiteren Belichtungseinheit 108 befindlichen Bauplattform ergibt.

Soll zu einem bestimmten Zeitpunkt eines von den Materialien aus einer der drei übrigen Wannen 104 verwendet werden, wird die Drehscheibe um einen Winkel entsprechend 90°, 180° oder 270° gedreht, um eine der folgenden Wannen zu der gerade betrachteten Vorrichtung zum Aufbau des Formkörpers zu bringen.

Wie in Fig. 8 unten angedeutet, kann an der Drehscheibe im Bereich eines anderen Kreisringsegments eine weitere Vorrichtung zum Aufbau von Formkörpern vorgesehen sein, die parallel zu der oben gezeigten Vorrichtung arbeiten kann.

## Patentansprüche

1. Vorrichtung zur Verarbeitung von lichtpolymerisierbarem Material (5; 55; 105) zum schichtweisen Aufbau eines Formkörpers (27) unter Anwendung einer lithographiebasierten generativen Fertigung, z.B. Rapid Prototyping, mit
einer Wanne (4; 64; 104) mit einem wenigstens teilweise lichtdurchlässig ausgebildeten horizontalen Boden (6; 56; 106), in die lichtpolymerisierbares Material (5; 55; 105) einfüllbar ist,
einer horizontalen Bauplattform (12; 62), die in einstellbarer Höhe über dem Wannenboden (6; 56; 106) gehalten ist,
einer Belichtungseinheit (10; 60), die zur ortsselektiven Belichtung einer Fläche auf der Bauplattform (12; 62) mit einem Intensitätsmuster mit vorgegebener Geometrie ansteuerbar ist,
einer Steuereinheit (11; 61), die dazu vorbereitet ist, in aufeinanderfolgenden Belichtungsschritten übereinanderliegende Schichten (28) auf der Bauplattform (12; 62) jeweils mit vorgegebener Geometrie durch Steuerung der Belichtungseinheit (10; 60) zu polymerisieren und nach jedem Belichtungsschritt für eine Schicht (28) die Relativposition der Bauplattform (12; 62) zum Wannenboden (6; 56; 106) anzupassen, um so sukzessive den Formkörper (27) in der gewünschten Form, die sich aus der Folge der Schichtgeometrien ergibt, aufzubauen,
wobei die Wanne (4; 54; 104) bezüglich der Belichtungseinheit (10; 60) und der Bauplattform (12; 62) horizontal beweglich ist und eine Zufuhreinrichtung (8; 58; 108) vorgesehen ist, die unter Steuerung der Steuereinheit (11; 61) lichtpolymerisierbares Material (5; 55; 105) in die wenigstens eine Wanne (4; 54; 104) ausbringt, wobei Belichtungseinheit (10; 60) und Bauplattform (12; 62) horizontal auf Abstand zur Zufuhreinrichtung (8; 58; 108) angeordnet sind, und die Steuereinheit dazu vorbereitet ist, die Wanne (4; 54; 104) zwischen aufeinanderfolgenden Belichtungsschritten in vorgegebener Weise in einer horizontalen Ebene durch einen Antrieb (28) zu bewegen, um so von der Zufuhreinrichtung (8; 58; 108) auf den Wannenboden ausgebrachtes lichtpolymerisierbares Material (5; 55; 105) in den Bereich zwischen Belichtungseinheit (10; 60) und Bauplattform (12; 62) zu bringen, wobei die Belichtungseinheit (10; 60) unterhalb des Wannen-bodens (6; 56; 106) zur Belichtung des wenigstens teilweise lichtdurchlässigen Wannenbodens (6) von unten angeordnet ist und dass die Bauplattform (12; 62) an einem Hubmechanismus (14; 64; 114) durch die Steuereinheit (10; 60) höhenverstellbar oberhalb des Wannenbodens (6; 56; 106) gehalten ist, **dadurch gekennzeichnet, dass** die Steuereinheit dazu vorbereitet ist, die Dicke (21) der Schicht (28), nämlich der Abstand zwischen der Bauplattform (12; 62) oder der letzten erzeugten Schicht und dem Wannenboden (6; 56; 106), über den Hubmechanismus (14; 64; 114) einzustellen, indem er nach Nachführung von lichtpolymerisierbarem Material die Bauplattform (12; 62), falls vorhanden mit den daran gebildeten Schichten, wieder in das nachgeführte lichtpolymerisierbare Material (5; 55; 105) absenkt, so dass lichtpolymerisierbares Material aus dem verbleibenden Zwischenraum zum Wannenboden (6; 56; 106) verdrängt wird, und den verbleibende Abstand zwischen der abgesenkten unteren Oberfläche und dem Wannenboden in vorgegebener Weise von der Steuereinheit (11; 61) gesteuert einstellt.

2. Vorrichtung nach Anspruch 1, **dadurch gekennzeichnet, dass** in Bewegungsrichtung zwischen der Zufuhreinrichtung (8; 58; 108) und der Belichtungseinheit (10) sowie der Bauplattform (12; 62) eine Aufbringvorrichtung (26; 76; 126), insbesondere eine Rakel oder eine Rolle, angeordnet ist, deren Höhe über dem Wannenboden (6; 56; 106) einstellbar ist.

3. Vorrichtung nach Anspruch 1, **dadurch gekennzeichnet, dass** in dem Hubmechanismus (14; 64; 114) ein mit der Steuereinheit (11; 61) verbundener Kraftaufnehmer (29; 79) vorhanden ist, der in der Lage ist, die von dem Hubmechanismus (14; 64; 114) auf die Bauplattform (12; 62) ausgeübte Kraft zu messen und das Messergebnis an die Steuereinheit (11; 61) zu senden, wobei die Steuereinheit (11; 61) dazu vorbereitet ist, die Bauplattform (12; 62) mit einem vorgegebenen Kraftverlauf zu bewegen.

4. Vorrichtung nach einem der vorhergehenden Ansprüche, **dadurch gekennzeichnet, dass** die Wanne (4) um eine zentrale, vertikale Achse (22) drehbar gelagert ist, wobei die Belichtungseinheit (10) unter dem Wannenboden (6) und die Bauplattform (12) sowie die Zufuhreinrichtung (8) und die Aufbringvorrichtung (26) darüber in radialer Richtung versetzt gegenüber der vertikalen Drehachse (22) liegen, dass ein Antrieb (24) vorgesehen ist, der in der Lage ist, unter Steuerung der Steuereinheit (11) die Wanne (4) zwischen aufeinanderfolgenden Belichtungsschritten um einen vorgegebenen Winkel um die zentrale Drehachse (22) zu drehen.

5. Vorrichtung nach einem der vorhergehenden Ansprüche, **dadurch gekennzeichnet, dass** die Wanne (54) entlang einer Linie versetzbar gelagert ist und dass ein Antrieb (74) vorgesehen ist, der in der Lage ist, unter Steuerung der Steuereinheit (61) die Wanne (54) zwischen aufeinanderfolgenden Belichtungsschritten um einen vorgegebenen Weg zu verschieben.

6. Vorrichtung nach einem der vorhergehenden Ansprüche, **dadurch gekennzeichnet, dass** als Lichtquelle der Belichtungseinheit (10; 60) Leuchtdioden (23; 73) dienen.

7. Vorrichtung nach Anspruch 6, **dadurch gekennzeichnet, dass** die Leuchtdioden (23; 73) Licht mit unterschiedlichen Lichtwellenlängen emittieren.

8. Vorrichtung nach einem der vorhergehenden Ansprüche, **dadurch gekennzeichnet, dass** die Belichtungseinheit (10; 60) weiter zumindest einen Referenzsensor (1; 51) aufweist, der in Form eines ein Belichtungsfeld abtastenden Photosensors oder in Form einer ein Belichtungsfeld erfassenden CCD-Kamera ausgebildet ist, wobei die Steuereinheit (11; 61) dazu vorbereitet ist, in einem Kalibrationsschritt das Belichtungsfeld mit einem über das ganze Belichtungfeld vorgegebenen Ansteuerungssignal für die Belichtungseinheit (10; 60) zu belichten und das von dem Referenzsensor (1; 51) erfasste Intensitätsmuster im Belichtungsfeld zur Berechnung einer Kompensationsmaske zur Erzielung einer gleichmäßigen Intensität im gesamten Belichtungsfeld zu verwenden.

9. Vorrichtung nach einem der vorhergehenden Ansprüche, **dadurch gekennzeichnet, dass** eine Mehrzahl von Wannen (104), denen jeweils eine Zufuhreinrichtung (108) für eines aus einer Mehrzahl von Materialien (105) zugeordnet ist, und ein Antrieb vorhanden ist, der gesteuert durch die Steuereinheit jeweils eine der Wannen (104) in einer ausgewählten vorgegebenen Reihenfolge zwischen Belichtungseinheit und Bauplattform bewegt, wobei diese Bewegung eine lineare Bewegung bei nebeneinander angeordneten Wannen oder eine rotierende Bewegung bei der Anordnung mehrerer Wannen (104) entlang einer gekrümmten Bahn ist.

10. Vorrichtung nach einem der vorhergehenden Ansprüche, **dadurch gekennzeichnet, dass** die Zufuhreinrichtung (8) für lichtpolymerisierbares Material (5) eine Aufnahme zum auswechselbaren Einsetzen einer Kartusche (9) mit lichtpolymerisierbarem Material (5) hat.

11. Verfahren zur Verarbeitung von lichtpolymerisierbarem Material (5; 55; 105) zum Aufbau eines Formkörpers (27) unter Anwendung einer lithographiebasierten generativen Fertigungstechnik, z.B. Rapid Prototyping, bei dem eine Schicht (28) aus einem lichtpolymerisierbaresn Material (5; 55; 105), das sich in zumindest einer Wanne (4; 54; 104) mit einem insbesondere lichtdurchlässig ausgebildeten, horizontalen Boden (6; 56; 106) befindet, auf wenigstens einer in eine Wanne (4; 54; 104) ragenden, horizontalen Bauplattform (12; 62) mit vorgegebener Geometrie in einem Belichtungsfeld durch Belichten polymerisiert wird,
die Bauplattform (12; 62) zur Bildung einer nachfolgenden Schicht vertikal verschoben wird,
lichtpolymerisierbares Material (5; 55; 105) auf die zuletzt gebildete Schicht (28) nachgeführt wird, und
durch Wiederholen der vorhergehenden Schritte schichtweise der Formkörper (27) in der gewünschten Form, die sich aus der Folge der Schichtgeometrien ergibt, aufgebaut wird,
wobei die Wanne (4; 54; 104) horizontal in eine Zufuhrstellung versetzbar ist, eine Zufuhreinrichtung (8) lichtpolymerisierbares Material (5; 55; 105) wenigstens auf ein Belichtungsfeld des Wannenbodens (6; 56; 106) ausbringt, bevor die zumindest eine Wanne (4; 54; 104) in eine Belichtungsstellung versetzt wird, in der sich das Belichtungsfeld unterhalb der Bauplattform (12; 62) und oberhalb der Belichtungseinheit (10; 60) befindet, und die Belichtung erfolgt, **dadurch gekennzeichnet, dass** die Schichtdicke des Materials (5; 55; 105) über den Abstand zwischen der Bauplattform (12; 62) und dem Wannenboden (6; 56; 106) mit Hilfe eines Hubmechanismus (14; 64; 114) eingestellt wird, der nach Nachführung von lichtpolymerisierbarem Material die Bauplattform (12; 62), falls vorhanden mit den daran gebildeten Schichten, wieder in das nachgeführte lichtpolymerisierbare Material (5; 55; 105) absenkt, so dass lichtpolymerisierbares Material aus dem verbleibenden Zwischenraum zum Wannenboden (6; 56; 106) verdrängt wird, und den verbleibende Abstand zwischen der abgesenkten unteren Oberfläche und dem Wannenboden in vorgegebener Weise von der Steuereinheit (11; 61) gesteuert einstellt.

12. Verfahren nach Anspruch 11, **dadurch gekennzeichnet, dass** die Verteilung des zugeführten Materials (5; 55; 105) in einer vorgegebenen Schichtdicke (33) auf dem Wannenboden (6; 56; 106), insbesondere auf dem Belichtungsfeld, während des Versetzens der Wanne (4; 54; 104) aus der Zufuhrstellung in die Belichtungsstellung mit Hilfe einer zwischen der Zufuhreinrichtung (8; 58; 108) und der Belichtungseinrichtung (10; 60) sowie der Bauplattform (12; 62) angeordneten Aufbringvorrichtung (26; 76; 126), z.B. einer Rakel oder einer Rolle, deren Höhe über dem Wannenboden (6; 56; 106) einstellbar ist, vorgenommen wird.

13. Verfahren nach Anspruch 11, **dadurch gekennzeichnet, dass** das Anheben und/oder Absenken der Bauplattform (12; 62) kraftgesteuert nach Maßgabe eines vorgegebenen Kraftverlaufs erfolgt.

14. Verfahren nach einem der Ansprüche 11 bis 14, **dadurch gekennzeichnet, dass** die Wanne (4) drehbar gelagert ist und zwischen aufeinanderfolgenden Schichtaufbauschritten um einen vorgegebenen Winkel um die vertikale Achse (22) gedreht wird.

15. Verfahren nach einem der Ansprüche 11 bis 14, bei dem die Wanne (54) seitlich versetzbar gelagert ist und zwischen aufeinanderfolgenden Schichtaufbauschritten um einen vorgegebenen Weg horizontal versetzt wird.

16. Verfahren nach einem der Ansprüche 11 bis 15, bei dem in aufeinanderfolgenden Schichtaufbauschritten in einer auswählbaren Reihenfolge eine Mehrzahl von verschiedenen Materialien (105) zum Schichtaufbau verwendet wird, indem eine Mehrzahl von Wannen (104), denen jeweils eine Zufuhreinrichtung (108) mit einem aus der Mehrzahl von Materialien (105) zugeordnet ist, in einer ausgewählten Reihenfolge zwischen Belichtungseinheit und Bauplattform bewegt wird, wobei diese Bewegung eine rotierende Bewegung bei Anordnung mehrerer Wannen (104) entlang einer gekrümmten Bahn bzw. eine lineare Bewegung ist, wenn die Wannen entlang einer Geraden angeordnet sind.

## Claims

1. A device for processing light-polymerizable material (5; 55; 105) for building up an object (27) in layers, using lithography-based generative fabrication, for example rapid prototyping, with
a vat (4; 64; 104) with an at least partially transparently or translucently formed horizontal bottom (6; 56; 106), into which light-polymerizable material (5; 55; 105) can be filled,
a horizontal build platform (12; 62) which is held at a settable height above the vat bottom (6; 56; 106),
an exposure unit (10; 60), which can be controlled for position selective exposure of a surface on the build platform (12; 62) with an intensity pattern with predetermined geometry, and
a control unit (11; 61), which is arranged for polymerizing in successive exposure steps layers (28) lying one above the other on the build platform (12; 62), respectively with predetermined geometry, by controlling the exposure unit (10; 60) and for adjusting, after each exposure step for a layer (28), the relative position of the build platform (12; 62) to the vat bottom (6; 56; 106), in order in this way to build up the object (27) successively in the desired form, which results from the sequence of the layer geometries,
wherein the vat (4; 54; 104) is horizontally movable with respect to the exposure unit (10; 60) and the build platform (12; 62) and a feed device (8; 58; 108) is provided which, under the control of the control unit (11; 61), discharges light-polymerizable material (5; 55; 105) into the at least one vat (4; 54; 104), the exposure unit (10; 60) and the build platform (12; 62) being arranged horizontally at a distance from the feed device (8; 58; 108), and the control unit is arranged for moving the vat (4; 54; 104) between successive exposure steps in a prescribed way in a horizontal plane by a drive (28), in order to bring light-polymerizable material (5; 55; 105) that has been discharged in this way by the feed device (8; 58; 108) onto the vat bottom into the region between the exposure unit (10; 60) and the build platform (12; 62), wherein the exposure unit (10; 60) is arranged below the vat bottom (6; 56; 106) for exposure of the at least partially transparent vat bottom (6) from below and in that the build platform (12; 62) is held on a lifting mechanism (14; 64; 114) above the vat bottom (6; 56; 106) in a manner in which it can be adjusted in height by the control unit (11; 61), **characterized in that in that** the control unit is arranged for setting the thickness (21) of the layer (28), to be specific the distance between the build platform (12; 62) or the layer last formed and the vat bottom (6; 56; 106), by means of the lifting mechanism (14; 64; 114), **in that** after renewed feeding of light-polymerizable material, it lowers the build platform (12; 62) with the layers formed on it, if any are present, again into the newly fed light-polymerizable material (5; 55; 105), so that light-polymerizable material is displaced from the remaining intermediate space with respect to the vat bottom (6; 56; 106), and it sets the remaining distance between the lowered lower surface and the vat bottom in a prescribed manner under the control of the control unit (11; 61).

2. The device as claimed in claim 1, **characterized in that**, arranged between the feed device (8; 58; 108) and the exposure unit (10) and the build platform (12; 62) in the direction of movement is an application device (26; 76; 126), in particular a doctor blade or a roller, the height of which above the vat bottom (6; 56; 106) can be set.

3. The device as claimed in claim 1, **characterized in that** in the lifting mechanism (14; 64; 114), and connected to the control unit (11; 61), there is a force transducer (29; 79), which is capable of measuring the force exerted by the lifting mechanism (14; 64; 114) on the build platform (12; 62) and sending the measurement result to the control unit (11; 61), the control unit (11; 61) being arranged for moving the build platform (12; 62) with a prescribed force profile.

4. The device as claimed in one of the preceding claims, **characterized in that** the vat (4) is mounted rotatably about a central, vertical axis of rotation (22), the exposure unit (10) lying below the vat bottom (6) and the build platform (12) and the feed device (8) and the application device (26) lying above it, offset in the radial direction with respect to the vertical axis of rotation (22), **in that** a drive (24) is provided and, under the control of the control unit (11), is capable of turning the vat (4) by a prescribed angle about the central axis of rotation (22) between successive exposure steps.

5. The device as claimed in one of the preceding claims, **characterized in that** the vat (54) is mounted such that it can be moved along a line and **in that** a drive (74) is provided and is capable of displacing the vat (54) by a prescribed distance between successive exposure steps under the control of the control unit (61).

6. The device as claimed in one of the preceding claims, **characterized in that** light-emitting diodes (23; 73) serve as the light source of the exposure unit (10; 60).

7. The device as claimed in claim 6, **characterized in that** the light-emitting diodes (23; 73) emit light with different optical wavelengths.

8. The device as claimed in one of the preceding claims, **characterized in that** the exposure unit (10; 60) also has at least one reference sensor (1; 51), which is in the form of a photosensor scanning an exposure area or in the form of a CCD camera recording an exposure area, the control unit (11; 61) being arranged for operating in a calibration step by exposing the exposure area with a control signal for the exposure unit (10; 60) that is prescribed over the entire exposure area and using the intensity pattern recorded by the reference sensor (1; 51) in the exposure area for calculating a compensation mask to achieve a uniform intensity in the entire exposure area.

9. The device as claimed in one of the preceding claims, **characterized in that** there are a plurality of vats (104), each of which is assigned a feed device (108) for one of a plurality of materials (105), and a drive, which, under the control of the control unit (111), moves one of the vats (104) in each case in a selected prescribed sequence between the exposure unit and the build platform, this movement being a linear movement in the case of vats arranged next to one another or a rotating movement in the case where multiple vats (104) are arranged along a curved path.

10. The device as claimed in one of the preceding claims, **characterized in that** the feed device (8) for light-polymerizable material (5) has a receptacle for exchangeably inserting a cartridge (9) with light-polymerizable material (5).

11. A method for processing light-polymerizable material (5; 55; 105) for building up an object (27), using a lithography-based generative fabrication technique, for example rapid prototyping, in which a layer (28) of a light-polymerizable material (5; 55; 105), which is located in at least one vat (4; 54; 104) with an in particular transparently or translucently formed, horizontal bottom (6; 56; 106), is polymerized on at least one horizontal build platform (12; 62), protruding into a vat (4; 54; 104), with predetermined geometry by exposure in an exposure area,
the build platform (12; 62) is displaced vertically for the forming of a subsequent layer,
light-polymerizable material (5; 55; 105) is newly fed onto the layer (28) last formed, and
by repeating the previous steps, the object (27) is built up in layers in the desired form, which results from the sequence of the layer geometries,
wherein the vat (4; 54; 104) can be moved horizontally into a feed position, a feed device (8) discharges light-polymerizable material (5; 55; 105) at least onto an exposure area of the vat bottom (6; 56; 106) before the at least one vat (4; 54; 104) is moved into an exposure position, in which the exposure area is located below the build platform (12; 62) and above the exposure unit (10; 60), and the exposure takes place, **characterized in that** the layer thickness of the material (5; 55; 105) is set by means of the distance between the build platform (12; 62) and the vat bottom (6; 56; 106) with the aid of a lifting mechanism (14; 64; 114), which, after renewed feeding of light-polymerizable material, lowers the build platform (12; 62) with the layers formed on it, if any are present, again into the newly fed light-polymerizable material (5; 55; 105), so that light-polymerizable material is displaced from the remaining intermediate space with respect to the vat bottom (6; 56; 106), and the remaining distance between the lowered lower surface and the vat bottom is set in a prescribed manner under the control of the control unit (11; 61).

12. The method as claimed in claim 11, **characterized in that** the distribution of the fed material (5; 55; 105) in a prescribed layer thickness (33) on the vat bottom (6; 56; 106), in particular on the exposure area, while the moving of the vat (4; 54; 104) from the feed position into the exposure position is performed with the aid of an application device (26; 76; 126) arranged between the feed device (8; 58; 108) and the exposure unit (10; 60) as well as the build platform (12; 62), for example a doctor blade or a roller, the height of which above the vat bottom (6; 56; 106) can be set.

13. The method as claimed in claim 11, **characterized in that** the raising and/or lowering of the build platform (12; 62) takes place under force control in accordance with a prescribed force profile.

14. The method as claimed in one of claims 11 to 14, **characterized in that** the vat (4) is rotatably mounted and is turned about a prescribed angle about the vertical axis (22) between successive layer building steps.

15. The method as claimed in one of claims 11 to 14, in which the vat (54) is mounted such that it can be moved laterally and is moved horizontally over a prescribed distance between successive layer building steps.

16. The method as claimed in one of claims 11 to 15, in which a plurality of different materials (105) are used for building up layers in a selectable sequence in successive layer building steps, by a plurality of vats (104), each assigned a feed device (108) with one of the plurality of materials (105), being moved in a selected sequence between the exposure unit and the build platform, this movement being a rotating movement in the case where multiple vats (104) are arranged along a curved path or a linear movement if the vats are arranged along a straight line.

## Revendications

1. Dispositif de traitement d'un matériau photopolymérisable (5; 55; 105), destiné à la réalisation par couches d'un corps façonné (27), en mettant en oeuvre une fabrication générative basée sur la lithographie, par exemple le prototypage rapide, comprenant
une cuve (4; 54; 104), dotée d'un fond (6; 56; 106) horizontal au moins partiellement perméable à la lumière, dans laquelle peut être placé un matériau photopolymérisable (5; 55; 105),
une plateforme de construction (12; 62) horizontale qui est tenue à une hauteur réglable au-dessus du fond de cuve (6; 56; 106),
une unité d'exposition (10; 60) qui peut être activée en vue de l'exposition d'emplacements sélectionnés d'une surface sur la plateforme de construction (12; 62), avec un motif d'intensité de géométrie prédéterminée,
une unité de commande (11; 61) qui est préparée pour polymériser, au cours d'étapes d'exposition successives, des couches (28) superposées sur la plateforme de construction (12; 62), respectivement avec une géométrie prédéterminée, en activant l'unité d'exposition (10; 60), et pour adapter, après chaque étape d'exposition pour une couche (28), la position relative de la plateforme de construction (12; 62) par rapport au fond de cuve (6; 56; 106), afin de réaliser ainsi successivement le corps façonné (27) avec la forme souhaitée qui résulte de la succession des géométries de couches,
sachant que la cuve (4; 54; 104) peut être déplacée horizontalement par rapport à l'unité d'exposition (10; 60) et la plateforme de construction (12; 62), et qu'il est prévu un dispositif d'alimentation (8; 58; 108) qui, sous le contrôle de l'unité de commande (11; 61), délivre du matériau photopolymérisable (5; 55; 105) dans la cuve (4; 54; 104), au nombre d'au moins une, l'unité d'exposition (10; 60) et la plateforme de construction (12; 62) étant disposées horizontalement à distance du dispositif d'alimentation (8; 58; 108), et l'unité de commande étant préparée pour déplacer la cuve (4; 54; 104) de façon prédéterminée à l'aide d'un moyen d'entraînement (28) dans un plan horizontal entre des étapes d'exposition successives, afin d'amener ainsi du matériau photopolymérisable (5; 55; 105), délivré sur le fond de la cuve par le dispositif d'alimentation (8; 58; 108), dans la région située entre l'unité d'exposition (10; 60) et la plateforme de construction (12; 62), sachant que l'unité d'exposition (10; 60) est installée sous le fond de cuve (6; 56; 106), en vue de l'irradiation par le bas du fond de cuve (6) au moins partiellement perméable à la lumière, et que la plateforme de construction (12; 62) est tenue sur un mécanisme de levage (14; 64; 114), au-dessus du fond de cuve (6; 56; 106), avec possibilité de réglage en hauteur par l'unité de commande (11; 61), **caractérisé en ce que** l'unité de commande est préparée pour régler l'épaisseur (21) de la couche (28), à savoir la distance entre la plateforme de construction (12; 62) ou la dernière couche générée et le fond de cuve (6; 56; 106), par l'intermédiaire du mécanisme de levage (14; 64; 114), par le fait que ce dernier, après l'amenée de matériau photopolymérisable, abaisse la plateforme de construction (12; 62), le cas échéant avec les couches formées sur celle-ci, de nouveau dans le matériau photopolymérisable (5; 55; 105) rechargé, de sorte que du matériau photopolymérisable est déplacé depuis l'interstice qui subsiste en direction du fond de cuve (6; 56; 106), et règle de manière prédéfinie la distance qui subsiste entre la surface inférieure abaissée et le fond de cuve, sous le contrôle de l'unité de commande (11; 61).

2. Dispositif selon la revendication 1, **caractérisé en ce que** dans le sens de déplacement entre le dispositif d'alimentation (8; 58; 108) et l'unité d'exposition (10) ainsi que la plateforme de construction (12; 62), il est prévu un dispositif d'application (26; 76; 126), en particulier une râcle ou un rouleau, dont la hauteur au-dessus du fond de cuve (6; 56; 106) est réglable.

3. Dispositif selon la revendication 1, **caractérisé en ce que** dans le mécanisme de levage (14; 64; 114), il est prévu un capteur de force (29; 79) qui est relié à l'unité de commande (11; 61) et est apte à mesurer la force exercée par le mécanisme de levage (14; 64; 114) sur la plateforme de construction (12; 62) et à transmettre le résultat de mesure à l'unité de commande (11; 61), l'unité de commande (11; 61) étant préparée pour déplacer la plateforme de construction (12; 62) avec une variation de force prédéterminée.

4. Dispositif selon l'une quelconque des revendications précédentes, **caractérisé en ce que** la cuve (4) est montée avec possibilité de rotation autour d'un axe (22) vertical central, l'unité d'exposition (10) se trouvant sous le fond de cuve (6), et la plateforme de construction (12) ainsi que le dispositif d'alimentation (8) et le dispositif d'application (26) se trouvant au-dessus, en étant décalés dans la direction radiale par rapport à l'axe de rotation (22) vertical, **en ce qu'**il est prévu un moyen d'entraînement (24) qui est apte à faire tourner la cuve (4), sous le contrôle de l'unité de commande (11), d'un angle prédéterminé autour de l'axe de rotation (22) central, entre des étapes d'exposition successives,

5. Dispositif selon l'une quelconque des revendications précédentes, **caractérisé en ce que** la cuve (54) est montée avec possibilité de déplacement le long d'une ligne, et **en ce qu'**il est prévu un moyen d'entraînement (74) qui est apte à déplacer la cuve (54), sous le contrôle de l'unité de commande (61), d'une distance prédéterminée entre des étapes d'exposition successives.

6. Dispositif selon l'une quelconque des revendications précédentes, **caractérisé en ce que** des diodes électroluminescentes (23; 74) servent de source lumineuse pour l'unité d'exposition (10; 60).

7. Dispositif selon la revendication 6, **caractérisé en ce que** les diodes électroluminescentes (23; 73) émettent de la lumière avec des longueurs d'ondes lumineuses différentes.

8. Dispositif selon l'une quelconque des revendications précédentes, **caractérisé en ce que** l'unité d'exposition (10; 60) présente en outre au moins un capteur de référence (1; 51) qui est réalisé sous la forme d'un capteur photoélectrique balayant un champ d'exposition ou sous la forme d'une caméra CCD observant un champ d'exposition, l'unité de commande (11; 61) étant préparée pour irradier le champ d'exposition, au cours d'une étape d'étalonnage, avec un signal d'activation pour l'unité d'exposition (10; 60) qui est prédéterminé pour l'ensemble du champ d'exposition, et pour utiliser le motif d'intensité détecté dans le champ d'exposition par le capteur de référence (1; 51), afin de calculer un masque de compensation pour obtenir une intensité uniforme dans l'ensemble du champ d'exposition.

9. Dispositif selon l'une quelconque des revendications précédentes, **caractérisé en ce qu'**il est prévu une pluralité de cuves (104), auxquelles est associé respectivement un dispositif d'alimentation (108) pour un matériau parmi une pluralité de matériaux (105), et un moyen d'entraînement qui, sous le contrôle de l'unité de commande, déplace respectivement l'une des cuves (104) dans un ordre prédéterminé sélectionné, entre l'unité d'exposition et la plateforme de construction, ce déplacement étant un mouvement linéaire, lorsque les cuves sont disposées les unes à côté des autres, ou un mouvement rotatif, lorsque plusieurs cuves (104) sont installées le long d'une trajectoire courbe.

10. Dispositif selon l'une quelconque des revendications précédentes, **caractérisé en ce que** le dispositif d'alimentation (8) de matériau photopolymérisable (5) présente un logement pour l'insertion, avec possibilité de remplacement, d'une cartouche (9) avec du matériau photopolymérisable (5).

11. Procédé de traitement d'un matériau photopolymérisable (5; 55; 105) pour réaliser un corps façonné (27), en mettant en oeuvre une technique de fabrication générative basée sur la lithographie, par exemple le prototypage rapide, selon lequel une couche (28) d'un matériau photopolymérisable (5; 55; 105) qui se trouve dans au moins une cuve (4; 54; 104) dotée d'un fond (6; 56; 106) horizontal, notamment perméable à la lumière, est polymérisée avec une géométrie prédéterminée par exposition dans un champ d'exposition, sur au moins une plateforme de construction (12; 62) horizontale, avançant dans une cuve (4; 54; 104),
la plateforme de construction (12; 62) est déplacée verticalement aux fins de réaliser une couche suivante,
du matériau photopolymérisable (5; 55; 105) est amené sur la dernière couche (28) formée, et
par répétition des étapes précédentes, le corps façonné (27) est réalisé par couches, avec la forme souhaitée qui résulte de la succession des géométries de couche,
la cuve (4; 54; 104) pouvant être déplacée horizontalement dans une position d'alimentation, et un dispositif d'alimentation (8) délivrant du matériau photopolymérisable (5; 55; 105) au moins sur un champ d'exposition du fond de cuve (6; 56; 106), avant que la cuve (4; 54; 104), au nombre d'au moins une, ne soit déplacée dans une position d'exposition, dans laquelle le champ d'exposition se trouve sous la plateforme de construction (12; 62) et au-dessus de l'unité d'exposition (10; 60), et que l'exposition ne soit réalisée, **caractérisé en ce que** l'épaisseur de couche du matériau (5; 55; 105) est réglée par l'intermédiaire de la distance entre la plateforme de construction (12; 62) et le fond de cuve (6; 56; 106), à l'aide d'un mécanisme de levage (14; 64; 114) qui, après distribution de matériau photopolymérisable, abaisse de nouveau la plateforme de construction (12; 62), le cas échéant avec les couches qui y sont formées, dans le matériau photopolymérisable (5; 55; 105) délivré, de sorte que du matériau photopolymérisable est déplacé depuis l'interstice qui subsiste, en direction du fond de cuve (6; 56; 106), et règle de manière prédéfinie la distance qui subsiste entre la surface inférieure abaissée et le fond de cuve, sous le contrôle de l'unité de commande (11; 61).

12. Procédé selon la revendication 11, **caractérisé en ce que** la répartition du matériau (5; 55; 105) amené, avec une épaisseur de couche (33) prédéterminée, sur le fond de cuve (6; 56; 106), en particulier sur le champ d'exposition, est réalisée pendant le déplacement de la cuve (4; 54; 104) de la position d'amenée à la position d'exposition, à l'aide d'un dispositif d'application (26; 76; 126), par exemple une râcle ou un rouleau, qui est installé entre le dispositif d'alimentation (8; 58; 108) et le dispositif d'exposition (10; 60) ainsi que la plateforme de construction (12; 62) et dont la hauteur au-dessus du fond de cuve (6; 56; 106) est réglable.

13. Procédé selon la revendication 11, **caractérisé en ce que** le levage et/ou l'abaissement de la plateforme de construction (12; 62) sont commandés par une force, en fonction d'une variation de force prédéterminée.

14. Procédé selon l'une quelconque des revendications 11 à 14, **caractérisé en ce que** la cuve (4) est montée avec possibilité de rotation et est tournée d'un angle prédéterminé autour de l'axe vertical (22) entre des étapes successives de formation de couches.

15. Procédé selon l'une quelconque des revendications 11 à 14, selon lequel la cuve (54) est montée avec possibilité de décalage latéral et est décalée horizontalement d'une distance prédéterminée entre des étapes successives de formation de couches.

16. Procédé selon l'une quelconque des revendications 11 à 15, selon lequel, au cours d'étapes successives de formation de couches, une pluralité de matériaux (105) différents sont utilisés dans un ordre pouvant être sélectionné pour former des couches, par le fait qu'une pluralité de cuves (104), auxquelles est associé respectivement un dispositif d'alimentation (108) avec un matériau de la pluralité de matériaux (105), sont déplacées selon un ordre sélectionné entre l'unité d'exposition et la plateforme de construction, ce déplacement étant un mouvement rotatif, lorsque plusieurs cuves (104) sont disposées le long d'une trajectoire courbe, ou un mouvement linéaire lorsque les cuves sont installées le long d'une droite.
